# FASCICULE DE BREVET EUROPEEN

(11) **EP 4 041 581 B1**
(45) Date de publication et mention de la délivrance du brevet: **01.11.2023**
(21) Numéro de dépôt: 20796626.8
(22) Date de dépôt: 01.10.2020
(51) Int. Cl.: B60K 1/00, B60K 17/16, B60K 17/02, B60K 17/35

(54) **ENSEMBLE DE TRANSMISSION DE PUISSANCE ET VÉHICULE COMPRENANT CET ENSEMBLE**
KRAFTÜBERTRAGUNGSANORDNUNG UND FAHRZEUG MIT DIESER ANORDNUNG
POWER TRANSMISSION ASSEMBLY AND VEHICLE COMPRISING SAID ASSEMBLY

(30) Priorité: 11.10.2019 FR 1911321
(43) Date de publication de la demande: 17.08.2022
(73) Titulaire: Idee Services, 78740 Evecquemont (FR)
(72) Inventeur: MICHEL, Luc, 78740 EVECQUEMONT (FR)
(74) Mandataire: Plasseraud IP
(86) Numéro de dépôt international: PCT/FR2020/051728
(87) Numéro de publication internationale: WO 2021/069819

(56) Documents cités:
- EP-A1- 1 817 197
- WO-A1-01/56138
- WO-A1-2014/193297
- WO-A1-2016/032390
- DE-A1- 10 049 197
- JP-A- 2005 138 824
- US-A1- 2011 124 460

## Description

### DOMAINE TECHNIQUE

La présente invention est relative à un ensemble de transmission de puissance pour réaliser un véhicule électrique ou un véhicule hybride.

### ETAT DE LA TECHNIQUE ANTERIEURE

Plus particulièrement, l'invention concerne un ensemble de transmission de puissance pour réaliser un véhicule électrique ou un véhicule hybride (comprenant un moteur thermique et un moteur électrique). Par exemple, l'ensemble de transmission de puissance permet de transformer un véhicule thermique en véhicule hybride ou de transformer un véhicule thermique en véhicule électrique.

Par exemple, l'ensemble de transmission de puissance permet de réaliser un véhicule à quatre roues motrices ou de transformer un véhicule à deux roues motrices en un véhicule à quatre roues motrices. Par exemple, l'ensemble de transmission de puissance permet de transformer un véhicule avec un moteur thermique qui actionne l'essieu avant (véhicule de type traction ayant deux roues motrices à l'avant) en un véhicule à quatre roues motrices dans lequel un moteur électrique de cet ensemble est destiné à être relié directement ou indirectement à l'essieu arrière de ce véhicule. Réciproquement, on peut transformer un véhicule thermique de type propulsion en un véhicule à quatre roues motrice, l'ensemble de transmission de puissance étant alors relié directement ou indirectement à l'essieu avant du véhicule.

Notamment, l'ensemble de transmission de puissance comprend :
- une machine électrique comprenant un stator fixe par rapport au véhicule et un rotor mobile en rotation par rapport à un axe de rotation de ladite machine électrique, ladite machine électrique étant destinée à transmettre une puissance motrice et sa rotation à des roues d'un essieu du véhicule, ou inversement à freiner la rotation desdites roues par exemple en récupérant de l'énergie électrique à stoquer dans des batteries, et
- un différentiel comprenant au moins une entrée de différentiel connecté au rotor de la machine électrique, ledit différentiel comprenant une pluralité de roues dentées connectées entre-elles pour répartir la puissance en entrée de différentiel entre :
- une première sortie destinée à être connectée à un premier arbre de transmission de puissance à une première roue, et
- une deuxième sortie destinée à être connectée à un deuxième arbre de transmission de puissance à une deuxième roue,
la répartition étant fonction de la vitesse de rotation de la première sortie et deuxième sortie.

Une machine électrique peut être pilotée pour être dans un mode de moteur électrique dans lequel la puissance électrique est transformée en puissance mécanique de rotation, ou inversement dans un mode de générateur électrique dans lequel la puissance mécanique de rotation est transformée en puissance électrique. Dans ce dernier cas, la machine se transforme en frein à récupération d'énergie sous forme électrique, cette énergie électrique pouvant bien sûr être stockée dans des batteries du véhicule.

Par exemple, le brevet US 8 672 068 propose un ensemble de transmission de puissance de ce type.

Cet ensemble est directement installé dans l'essieu arrière, et l'axe de rotation du moteur électrique est coaxial avec l'arbre transversal du pont arrière du véhicule.

Cependant, cet ensemble est encombrant et difficile à implanter dans le volume disponible de l'essieu arrière du véhicule.

Un autre exemple d'ensemble de transmission de puissance pour véhicule comprenant une machine électrique, un différentiel intégrant cette dernière et deux sorties destinées à être connectées à un premier et un deuxième arbres de transmission de puissance, est aussi connu du document US 2011/124460 A1.

### EXPOSE DE L'INVENTION

La présente divulgation a pour but de proposer une solution plus facile à implanter dans le volume d'un essieu avant et/ou arrière de véhicule.

A cet effet, la présente divulgation se rapporte à un ensemble de transmission de puissance dans lequel :
- les roues dentées sont réparties autour de la machine électrique, la machine électrique se retrouvant à l'intérieur du volume du différentiel, et
- la machine électrique est une machine inversée dans laquelle le rotor est radialement à l'extérieur du stator par rapport à l'axe de rotation de la machine électrique.

On obtient un ensemble de transmission de puissance plus compact que dans l'art antérieur (à puissance équivalente), donc plus facile à intégrer pour motoriser un essieu avant et/ou arrière de véhicule.

L'installation de l'ensemble est alors plus facile sur le véhicule, notamment lorsqu'il s'agit de modifier un véhicule de série à deux roues motrices pour le transformer en véhicule à quatre roues motrices ou pour transformer un véhicule thermique en un véhicule électrique ou pour transformer un véhicule thermique en véhicule hybride. En effet, l'installation peut être effectuée en modifiant peu d'éléments de ce véhicule.

En outre, la machine électrique de cet ensemble de transmission de puissance peut :
- soit aider le moteur thermique dans le mode moteur électrique,
- soit freiner le véhicule dans le mode générateur électrique, par exemple tout en rechargeant des batteries.

Grâce à un tel fonctionnement dans lequel on pilote la machine électrique en frein ou en support d'un moteur principal tel qu'un moteur thermique, il est possible d'optimiser le fonctionnement du moteur thermique en fonctionnement. Il est aussi possible de réduire sa taille. On peut donc réaliser des économies d'énergie substantielles.

Dans divers modes de réalisation de l'ensemble de transmission de puissance selon la présente divulgation, on peut éventuellement avoir recours en outre à l'une et/ou à l'autre des dispositions suivantes.

La machine électrique de type inversée, avec le rotor à l'extérieur, permet d'augmenter le couple de cette machine électrique à faible vitesse de rotation, et permet d'obtenir un encombrement encore plus réduit. Ainsi, la machine électrique est mieux adaptée à un mode de fonctionnement à faible vitesse.

Selon un aspect, le rotor comprend :
- un flasque latéral qui s'étend radialement depuis l'axe de rotation, et
- une partie cylindrique portant des aimants de polarités alternées selon la direction circonférentielle de cette partie cylindrique, lesdits aimants faisant faces aux bobinages du stator.

Selon un aspect, l'ensemble comprend en outre un coupleur connecté entre la machine électrique et le différentiel.

Selon un aspect, le coupleur est un crabot ou un embrayage, ledit coupleur étant actionné par action mécanique, hydraulique ou électrique.

Selon un aspect, le différentiel comprend les sous-ensembles de roues dentées suivantes :
- un premier train épicycloïdal agencé selon l'axe de rotation AX sur un premier côté de la machine électrique,
- un second train épicycloïdal agencé selon l'axe de rotation AX sur un deuxième côté de la machine électrique, et à l'opposé du premier côté, et
- un mécanisme de liaison qui relie le premier train épicycloïdal au second train épicycloïdal,
les premier et second trains épicycloïdaux étant identiques.

Selon un aspect, le premier train épicycloïdal comprend un porte satellite correspondant à la première sortie du différentiel, le second train épicycloïdal comprend un porte satellite correspondant la deuxième sortie du second train épicycloïdal, un arbre d'entrainement reliant le planétaire intérieur, du premier train épicycloïdal, le planétaire intérieur du second train épicycloïdal et le rotor de la machine électrique, l'arbre d'entrainement correspondant à l'entrée de différentiel.

Selon un aspect, le mécanisme de liaison comprend :
- un premier pignon qui engrène à l'extérieur d'une couronne externe du premier train épicycloïdal,
- un premier arbre denté connecté au premier pignon,
- un deuxième pignon qui engrène à l'extérieur d'une couronne externe du second train épicycloïdal, et
- un deuxième arbre denté connecté au deuxième pignon, le premier arbre denté engrenant le deuxième arbre denté pour relier par inversion de sens de rotation la couronne externe du premier train épicycloïdal et la couronne externe du second train épicycloïdal.

Selon un aspect, l'ensemble comprend en outre un actionneur de commande adapté pour piloter la rotation du premier arbre denté ou du deuxième arbre denté, pour contrôler l'effet différentiel du différentiel.

Selon un aspect, le mécanisme de liaison comprend un pignon conique, le premier train épicycloïdal comprenant une couronne externe avec une portée conique complémentaire pour engrener avec le pignon conique, et le second train épicycloïdal comprenant une couronne externe avec une portée conique complémentaire pour engrener avec le pignon conique.

Selon un aspect, l'ensemble comprend en outre un actionneur de commande adapté pour piloter la rotation du pignon conique, pour contrôler l'effet différentiel du différentiel.

La divulgation se rapporte également à **un véhicule** comprenant :
- un essieu avant,
- un essieu arrière, et
- un ensemble de transmission de puissance du type précédent, l'élément de transmission de cet ensemble étant relié directement ou indirectement à l'essieu avant et/ou à l'essieu arrière du véhicule.

Dans divers modes de réalisation du véhicule selon la présente divulgation, on peut éventuellement avoir recours en outre à l'une et/ou à l'autre des dispositions suivantes.

Selon un aspect, l'essieu avant est couplé à un premier moteur, et l'ensemble de transmission est relié à l'essieu arrière pour obtenir un véhicule à quatre roues motrices.

Selon un aspect, l'essieu arrière est couplé à un premier moteur, et l'ensemble de transmission est relié à l'essieu avant pour obtenir un véhicule à quatre roues motrices.

Selon un aspect, l'ensemble comprend en outre un coupleur, et le coupleur est mis dans un état découplé si la vitesse du véhicule est supérieure à une vitesse limite, adaptée au mode de fonctionnement du véhicule.

### BREVE DESCRIPTION DES DESSINS

D'autres caractéristiques et avantages de la divulgation apparaîtront au cours de la description suivante d'un de ses modes de réalisation, donné à titre d'exemple non limitatif, en regard des dessins joints.

Sur les dessins :
- la figure 1 est une vue de dessus schématique d'un véhicule;
- la figure 2 est une vue schématique d'un mode de réalisation d'une transmission de puissance ;
- la figure 3 est une vue d'un exemple de réalisation de la transmission de puissance de la figure 2 ;
- la figure 4 est une vue en coupe A-A de l'exemple de la figure 3 ; et
- la figure 5 est une vue schématique d'une variante du mode de réalisation de la figure 2.

Sur les différentes figures, les mêmes références numériques désignent des éléments identiques ou similaires.

### DESCRIPTION DETAILLEE

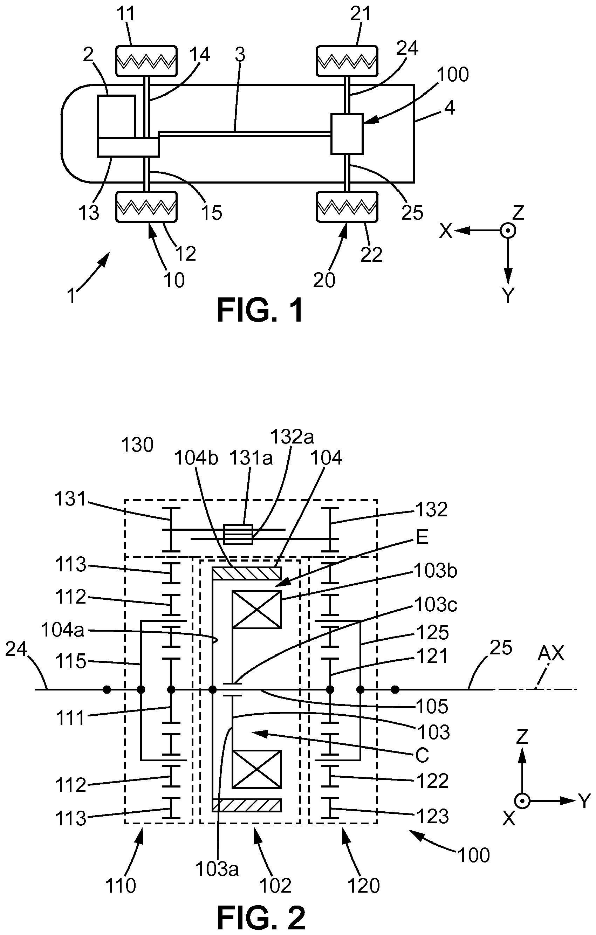

La **figure 1** est une vue de dessus schématique d'un véhicule 1 selon la présente divulgation. Ce véhicule 1 est par exemple, un véhicule à deux essieux, comprenant :
- un châssis 4,
- un essieu avant 10 couplé à un premier moteur 2, et
- un essieu arrière 20.

Dans cet exemple présenté en figure 1, l'essieu avant 10 est couplé à un premier moteur 2. Mais, toutes les variantes évoquées en introduction sont possibles.

Le premier moteur 2 est par exemple un moteur à combustion interne, ou éventuellement un premier moteur électrique.

L'essieu avant 10 comprend une roue à droite 11, une roue à gauche 12, et une unité de traction 13 qui couple le premier moteur aux roues à droite et à gauche 11, 12 par des arbres de traction 14, 15. L'unité de traction 13 comprend par exemple une boite de vitesse, et un dispositif différentiel pour répartir la puissance entre les roues à droite et à gauche de l'essieu avant 10.

L'essieu arrière 20 comprend une roue à droite 21, une roue à gauche 22, et un ensemble de transmission de puissance 100. L'ensemble de transmission de puissance 100 intègre ou inclut un différentiel 133 pour répartir la puissance entre les roues à droite et à gauche 21,22 de l'essieu arrière 20, par l'intermédiaire d'arbres de propulsion 24, 25.

Optionnellement, le véhicule 1 est initialement un véhicule à quatre roues motrices de type traditionnel, c'est-à-dire un véhicule à quatre roues motrices mues par le premier moteur 2. Le véhicule comprend en outre un arbre de transfert 3 qui couple également l'unité de traction 13 à l'essieu arrière 20 pour délivrer une partie de la puissance motrice du premier moteur 2 aux roues de l'essieu arrière 20. Cet arbre de transfert 3 est habituellement accouplé à une couronne d'engrènement du différentiel par un pignon conique.

D'autres éléments mécaniques sont usuellement introduits dans une telle chaîne mécanique, notamment par exemple des cardans pour permettre des mouvements de roues, et divers autres accouplements et mécanismes...

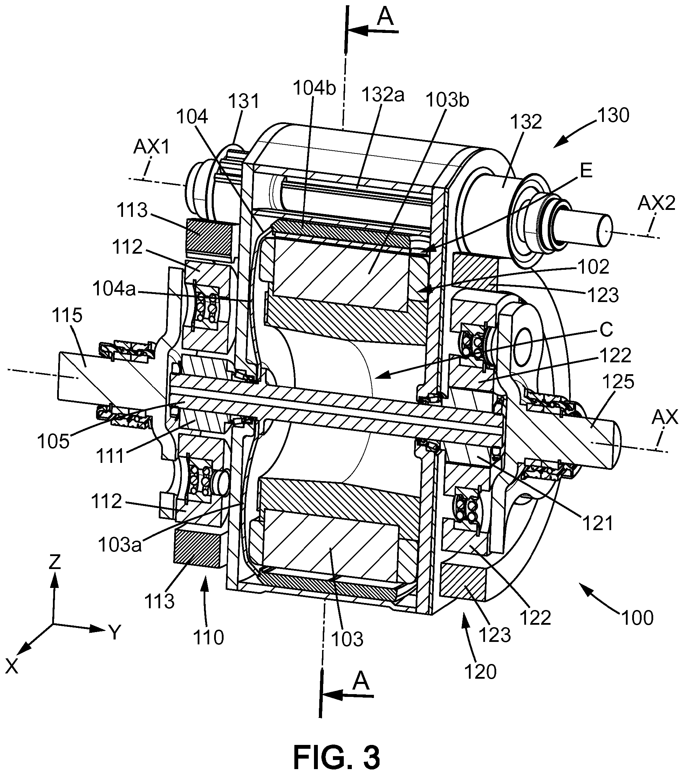

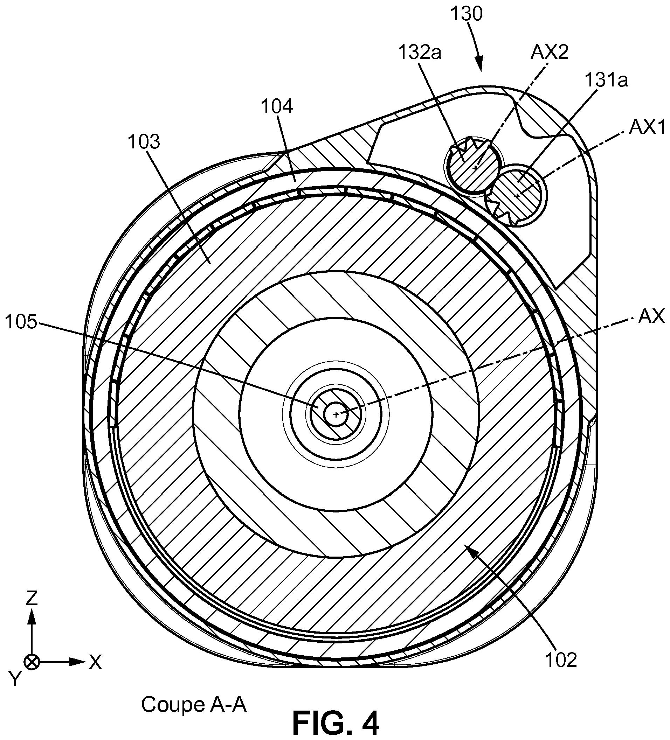

Les **figures 2 à 5** montrent **un mode de réalisation** d'un ensemble de transmission de puissance 100 selon la présente divulgation. La figure 2 est une vue schématique permettant de comprendre le fonctionnement, et les figures 3 et 4 représentent un exemple de réalisation de ce mode de réalisation de l'ensemble de transmission de puissance 100.

L'ensemble de transmission de puissance 100 comprend :
- une machine électrique 102 comprenant un stator 103 fixe par rapport au châssis 4 du véhicule 1 et un rotor 104 mobile en rotation par rapport à un axe de rotation AX de la machine électrique 102, et
- un différentiel 133 comprenant une entrée de différentiel connecté au rotor 104 de la machine électrique, le différentiel comprenant une pluralité de roues dentées connectées entre-elles pour répartir la puissance en entrée de différentiel, entre :
   - une première sortie S1 destinée à être connectée à un premier arbre de transmission de puissance d'une première roue, par exemple l'arbre de propulsion 24, et
   - une deuxième sortie S2 destinée à être connectée à un deuxième arbre de transmission de puissance d'une deuxième roue, par exemple l'arbre de propulsion 25, la répartition étant fonction de la vitesse de rotation de la première sortie S1 et de la deuxième sortie.

**La machine électrique 102 de cet ensemble de transmission 100 selon la divulgation est** en fait par exemple apte à fonctionner en mode moteur et/ou en mode générateur électrique. Cette machine électrique 102 est éventuellement une machine inversée dans laquelle le rotor 104 est radialement à l'extérieur du stator 103 par rapport à l'axe de rotation AX. Mais, une machine traditionnelle avec un rotor à l'intérieur du stator peut être réalisée. La suite de la description présente la première solution à machine inversé, peu habituelle mais qui présente des avantages en encombrement comme explicité ci-après.

En outre, les roues dentées du différentiel 133 sont réparties autour de la machine électrique 102, la machine électrique se trouvant alors à l'intérieur du volume du différentiel.

Grâce à ces dispositions, l'ensemble de transmission 100 est un dispositif compact. Cet ensemble de transmission 100 est apte à transmettre une puissance motrice électrique (par exemple) à l'essieu avant 10 ou à l'essieu arrière 20, avec peu de perte et avec un grand couple.

La machine électrique 102 est un moteur électrique et/ou un générateur électrique. Par exemple, la machine électrique en mode moteur est apte à aider un premier moteur (thermique) du véhicule. Par exemple, la machine électrique en mode générateur est apte à freiner le véhicule, éventuellement en rechargeant des batteries. Cette machine électrique est avantageusement une machine de type synchrone.

Le stator 103 comprend un corps de stator 103a équipé de bobinages 103b sur la périphérie externe de ce stator 103, et un palier 103c sur l'axe de rotation AX du moteur. Comme représenté sur la figure, le palier 103c est par exemple articulé en rotation autour de d'un arbre d'entrainement 105, cet arbre d'entrainement 105 étant lui-même articulé en rotation autour de l'axe de rotation AX, directement ou indirectement par rapport au châssis 4 du véhicule (non représenté).

Le stator 103 comprend ainsi une cavité annulaire C entre les bobinages 103b et l'axe de rotation AX. Une partie des roues dentées du différentiel 133 peuvent alors éventuellement être logées à l'intérieur de la cavité. Un coupleur (tel qu'explicité plus loin) peut être logé à l'intérieur de la cavité. En outre, cette architecture permet d'augmenter la section transversale des bobinages 103b en réduisant le volume de cette cavité C. A la conception, cela permet d'augmenter la section de cuivre, et donc cela permet d'augmenter le couple généré par la machine électrique 102. De cette manière, l'ensemble de transmission 100 est très compact.

Le rotor 104 comprend un corps de rotor 104a équipé d'aimants 104b venant en regard des bobinages 103b du stator. Le corps de rotor 104a comprend par exemple un flasque latéral 104c qui s'étend radialement depuis l'axe de rotation AX, et une partie cylindrique 104d externe portant les aimants 104b. Les aimants 104b sont positionnés sur la périphérie interne de ladite partie cylindrique 104d pour faire face aux bobinages 103b, et sont positionnés avec des polarités alternées selon la direction circonférentielle de la circonférence de cette partie cylindrique 104d.

Ainsi, dans la machine inversée présentée, les bobinages 103b sont situés sur le stator, dans la partie interne de la machine électrique 102 (proche de l'axe de rotation AX) et les aimants 104b sont situés sur le rotor, dans la partie externe de la machine électrique 102 (à l'extérieur du stator). Or, les bobinages 103b ont un encombrement radial (dans une direction perpendiculaire à l'axe de rotation AX) plus important que les aimants 104b. L'entrefer E du moteur est la zone cylindrique entre le stator 103 et le rotor 104. A diamètre d'entrefer E constant, une machine électrique de type inversé a alors un encombrement radial plus faible et/ou un couple plus élevé en comparaison d'une machine électrique non inversé.

Le rotor 104 de la machine électrique 102 est alors rendu solidaire (directement ou indirectement) de l'arbre d'entrainement 105 pour l'entrainer en rotation, cet arbre d'entrainement 105 correspondant alors à l'entrée du différentiel 133.

Ainsi, grâce à cette disposition, la machine électrique de la présente divulgation est plus efficace, notamment par exemple par rapport à son utilisation dans un véhicule 1 à quatre roues motrices pour une faible vitesse de roulage dudit véhicule.

En outre, l'ensemble de transmission 100 peut comprendre un coupleur (non représenté en figure 2) entre le rotor 104 de la machine électrique 102 et l'arbre d'entrainement 105 relié au différentiel 133.

Le coupleur est adapté pour basculer entre un état couplé dans lequel la machine électrique 102 peut actionner l'arbre d'entrainement 105 en rotation et un état découplé dans lequel la machine électrique 102 ne peut pas actionner l'arbre d'entrainement 105.

Le coupleur est donc un élément d'accouplement mécanique entre deux éléments qui peut être piloté. Ce coupleur est par exemple un système à crabot ou un embrayage. Le coupleur peut être actionné par action mécanique, hydraulique ou électrique (non représenté sur la figure 2).

Ce coupleur permet ainsi de découpler l'ensemble de transmission 100 lorsqu'il n'est pas utile au roulage du véhicule, ce qui permet d'améliorer le rendement global en supprimant les pertes mécanique de cet ensemble.

Eventuellement, lorsque plusieurs ensembles de transmission 100 équipent le véhicule, il est possible d'en coupler ou découpler mécaniquement un ou plusieurs, selon les besoins. Ainsi, la transmission de puissance du véhicule est plus efficace et bien plus modulaire que les dispositifs des essieux hybrides de l'art antérieur.

La figure 2 montre également un exemple particulier de mode de réalisation du différentiel 133. En outre, il est représenté tel qu'il serait utilisé sur un essieu arrière, c'est-à-dire avec la première sortie S1 et la deuxième sortie S2 connectées aux arbres de propulsion 24, 25 respectivement.

Dans ce mode de réalisation, le différentiel 133 comprend les sous-ensembles de roues dentées suivantes :
- un premier train épicycloïdal 110 agencé selon l'axe de rotation AX sur un premier côté de la machine électrique 102,
- un second train épicycloïdal 120 agencé selon l'axe de rotation AX sur un deuxième côté de la machine électrique 102, et à l'opposé du premier côté, et
- un mécanisme de liaison 130 qui relie le premier train épicycloïdal 110 au second train épicycloïdal 120.

Les premier et second trains épicycloïdaux sont avantageusement identiques et éventuellement positionnés symétriquement de part et d'autre de la machine électrique 102.

Le premier train épicycloïdal 110 comprend des roues dentées, telles que :
- un planétaire intérieur 111 connecté à l'arbre d'entrainement 105 d'axe de rotation AX,
- un ou plusieurs satellites 112 qui engrènent sur le planétaire intérieur 111 autour de l'axe de rotation AX,
- une couronne externe 113 qui engrène à l'extérieur du ou des satellites (i.e. à distance de l'axe de rotation AX), et
- un porte satellite 115 qui relie le ou des axes des satellites 112.

Le second train épicycloïdal 120 comprend des roues dentées, telles que :
- un planétaire intérieur 121 connecté à l'arbre d'entrainement 105 d'axe de rotation AX,
- un ou plusieurs satellites 112 qui engrènent sur le planétaire intérieur 121 autour de l'axe de rotation AX,
- une couronne externe 123 qui engrène à l'extérieur du ou des satellites (i.e. à distance de l'axe de rotation AX) et
- un porte satellite 125 qui relie le ou des axes des satellites 122.

Le porte satellite 115 du premier train épicycloïdal 110 correspond à la première sortie S1 et il est alors par exemple connecté (rendu solidaire) de l'arbre de propulsion 24. Réciproquement, le porte satellite 125 du second train épicycloïdal 120 correspond à la deuxième sortie S2 et il est alors par exemple connecté (rendu solidaire) de l'arbre de propulsion 25.

Selon une première variante représentée en **figures 2 à 4****,** le mécanisme de liaison 130 est constitué :
- un premier pignon 131 qui engrène à l'extérieur de la couronne externe 113 du premier train épicycloïdal 110,
- un premier arbre denté 131a connecté (solidaire) au premier pignon 131,
- un deuxième pignon 132 qui engrène à l'extérieur de la couronne externe 123 du second train épicycloïdal 120, et
- un deuxième arbre denté 132a connecté (solidaire) au deuxième pignon 132,
le premier arbre denté 131a engrenant (étant en prise avec) le deuxième arbre denté 132a pour relier par inversion de sens de rotation la couronne externe 113 du premier train épicycloïdal 110 et la couronne externe 123 du second train épicycloïdal 120.

L'ensemble du premier pignon 131 et du premier arbre denté 131a est mobile en rotation autour d'un premier axe de rotation AX1, parallèle à l'axe de rotation AX. L'ensemble du deuxième pignon 132 et du deuxième arbre denté 132a est mobile en rotation autour d'un deuxième axe de rotation AX2, parallèle à l'axe de rotation AX. Les premier et deuxième axes de rotation AX1, AX2 sont à une même distance de l'axe de rotation AX, et décalés angulairement autour de l'axe de rotation. Le schéma de la figure 2 étant réalisé dans un plan comprenant l'axe de rotation, ne représente que le principe de fonctionnement de ces axes, la figure 3 montrant alors un exemple de réalisation plus concret.

Grâce à ces dispositions, les deux trains épicycloïdaux 110, 120 et le mécanisme de liaison 130 se comportent comme un différentiel mécanique. Cet ensemble de différentiel 133 reste compact.

En outre, les trains épicycloïdaux 110, 120 ont un même rapport de réduction de la vitesse de rotation entre l'arbre d'entrainement 105 (le planétaire 111 ou le planétaire 121) et les portes satellites 115, 125. On évite ainsi l'utilisation d'un réducteur traditionnel en sortie de la machine électrique 102.

Le différentiel 133 cumule donc les fonctions de différentiel entre les sorties S1, S2 et de réduction de vitesse pour la machine électrique 102. Ce différentiel 133 avec des roues dentées autour de la machine électrique permet d'obtenir une architecture compacte.

Les **figures 3** **et** **4** montrent un exemple de réalisation pour lequel les références numériques désignent des éléments identiques ou similaires à celles de la figure 2, mais de des détails en trois dimensions de l'ensemble de transmission de puissance 100 sont visibles.

Notamment, sur ces figures, on s'aperçoit que le premier axe AX1 du premier arbre denté 131a et le deuxième axe AX2 du deuxième arbre denté 132a sont parallèles à l'axe de rotation AX, mais décalés angulairement autour de l'axe de rotation AX.

En outre, il est possible de piloter la rotation du premier arbre denté 131a ou du deuxième arbre denté 132a au moyen d'un actionneur de commande en rotation (non représenté).

Alors :
1) si cet actionneur de commande est laissé inactif, les arbres dentés sont libres de pivotés et on obtient un effet différentiel entre la première sortie S1 et la deuxième sortie S2 ;
2) si cet actionneur de commande freine les arbres dentés, on peut réduire ou supprimer l'effet différentiel entre la première sortie S1 et la deuxième sortie S2 ; et
3) si cet actionneur de commande est actionné, on peut piloter l'effet différentiel, ce qui permet de piloter la direction de l'essieu de ce différentiel, ce qui permet de contrôler la direction ou angle de lacet du véhicule.

Ainsi, l'actionneur de commande est apte à piloter l'effet différentiel entre la première sortie S1 et la deuxième sortie S2 par le contrôle de la vitesse de rotation du premier arbre denté ou du deuxième arbre denté.

Par exemple, le véhicule 1 comprend une électronique de contrôle du véhicule qui contrôle cet actionneur de commande pour contrôler la direction ou angle de lacet du véhicule. Ainsi, l'ensemble de transmission 100 devient non seulement un élément de puissance qui contribue à l'avancée du véhicule, mais également à son comportement dynamique, notamment en virage.

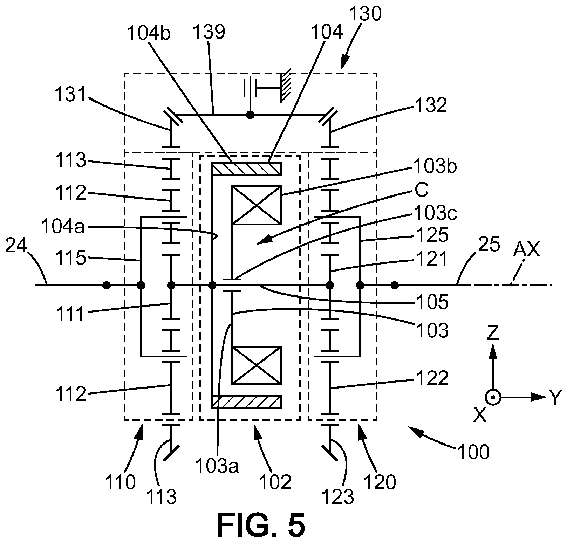

Selon une deuxième variante représentée en **figure 5****,** le mécanisme de liaison 130 est constitué d'un pignon conique 139.

La couronne externe 113 du premier train épicycloïdal 110 a une portée conique complémentaire du pignon conique et engrène avec ce pignon conique. La couronne externe 123 du second train épicycloïdal 120 a une portée conique complémentaire du pignon conique et engrène avec ce pignon conique. Ainsi, la couronne externe 113 et la couronne externe 123 ont des rotations de sens opposés.

Grâce à ces dispositions, les deux trains épicycloïdaux 110, 120 et le mécanisme de liaison 130 se comportent comme un différentiel mécanique. Cet ensemble de différentiel 133 reste compact.

Le pignon conique comprend un arbre de pignon perpendiculaire à l'axe de rotation AX.

Il est possible de piloter la rotation de l'arbre de pignon au moyen d'un actionneur de commande en rotation (non représenté) similaire à la première variante à deux arbres dentés, pour obtenir de même effet de pilotage de l'effet différentiel, c'est-à-dire soit pour obtenir un effet différentiel entre les roues, soit pour le supprimer, soit pour piloter la direction ou angle de lacet du véhicule. Ce pilotage de l'effet du directionnel sera par exemple mis en œuvre par une électronique de contrôle du véhicule comme précédemment. Ainsi, l'ensemble de transmission 100 devient non seulement un élément de puissance qui contribue à l'avancée du véhicule, mais également à son comportement dynamique, notamment en virage.

Ainsi, l'ensemble de transmission 100 selon les modes de réalisations présentés ci-dessus peut être intégré dans tout type de véhicule. Par exemple, il peut être intégré dans un véhicule à quatre roues motrices, en étant relié intégré à l'essieu avant 10 ou à l'essieu arrière 20 de ce véhicule.

Enfin, le coupleur sera avantageusement piloté par le véhicule 1 (son électronique) pour qu'il soit en état découplé si la vitesse du véhicule est supérieure à une vitesse limite. Cette vitesse limite est adaptée au mode de fonctionnement du véhicule. Elle peut être par exemple de 50 km/h ou 110 km/h.

Par exemple, la vitesse limite est de 50 km/h. Ainsi, le véhicule 1 est éventuellement dans un mode quatre roues motrices seulement en dessous de cette vitesse limite. Cela correspond bien à l'usage habituel du mode quatre roues motrices. A plus haute vitesse, le véhicule 1 est dans un mode deux roues motrices (celles de l'essieu avant 10), mais grâce au coupleur, la transmission de puissance 100 ne pénalise pas le rendement du véhicule 1 dans ce mode de fonctionnement.

Par exemple, la vitesse limite est de 110 km/h. Ainsi, le véhicule 1 est éventuellement dans un mode électrique ou hybride seulement en dessous de cette vitesse limite. A plus haute vitesse, le véhicule 1 est dans un mode thermique, mais grâce au coupleur, la transmission de puissance 100 ne pénalise pas le rendement du véhicule 1 dans ce mode de fonctionnement.

## Revendications

1. **Ensemble de transmission de puissance (100)** pour véhicule comprenant :
- une machine électrique (102) comprenant un stator (103) fixe par rapport au véhicule et un rotor (104) mobile en rotation par rapport à un axe de rotation (AX) de ladite machine électrique, et
- un différentiel (133) comprenant au moins une entrée de différentiel connecté au rotor de la machine électrique, ledit différentiel comprenant une pluralité de roues dentées connectées entre-elles pour répartir la puissance en entrée de différentiel entre :
- une première sortie destinée à être connectée à un premier arbre de transmission de puissance à une première roue, et
- une deuxième sortie destinée à être connectée à un deuxième arbre de transmission de puissance à une deuxième roue,
la répartition étant fonction de la vitesse de rotation de la première sortie et deuxième sortie,
- les roues dentées sont réparties autour de la machine électrique, la machine électrique se retrouvant à l'intérieur du volume du différentiel,
l'ensemble étant **caractérisé en ce que** :
- la machine électrique (102) est une machine inversée dans laquelle le rotor est radialement à l'extérieur du stator par rapport à l'axe de rotation.

2. Ensemble selon la revendication 1, dans lequel le rotor (104) comprend :
- un flasque latéral (104a) qui s'étend radialement depuis l'axe de rotation, et
- une partie cylindrique (104d) portant des aimants de polarités alternées selon la direction circonférentielle de cette partie cylindrique, lesdits aimants faisant faces aux bobinages du stator.

3. Ensemble selon l'une des revendications 1 à 2, comprenant en outre un coupleur connecté entre la machine électrique et le différentiel.

4. Ensemble selon la revendication 3, dans lequel le coupleur est un crabot ou un embrayage, ledit coupleur étant actionné par action mécanique, hydraulique ou électrique.

5. Ensemble selon l'une des revendications 1 à 4, dans lequel le différentiel (133) comprend les sous-ensembles de roues dentées suivantes :
- un premier train épicycloïdal (110) agencé selon l'axe de rotation AX sur un premier côté de la machine électrique,
- un second train épicycloïdal (120) agencé selon l'axe de rotation AX sur un deuxième côté de la machine électrique, et à l'opposé du premier côté, et
- un mécanisme de liaison (130) qui relie le premier train épicycloïdal (110) au second train épicycloïdal (120),
les premier et second trains épicycloïdaux étant identiques.

6. Ensemble selon la revendication 5, dans lequel le premier train épicycloïdal (110) comprend un porte satellite correspondant à la première sortie (S1) du différentiel, le second train épicycloïdal comprend un porte satellite (125) correspondant la deuxième sortie du second train épicycloïdal (120), un arbre d'entrainement (105) reliant le planétaire intérieur (111), du premier train épicycloïdal, le planétaire intérieur (121) du second train épicycloïdal et le rotor (104) de la machine électrique (102), l'arbre d'entrainement (105) correspondant à l'entrée de différentiel.

7. Ensemble selon la revendication 5 ou la revendication 6, dans lequel le mécanisme de liaison (130) comprend :
- un premier pignon (131) qui engrène à l'extérieur d'une couronne externe (113) du premier train épicycloïdal (110),
- un premier arbre denté (131a) connecté au premier pignon (131),
- un deuxième pignon (132) qui engrène à l'extérieur d'une couronne externe (123) du second train épicycloïdal (120), et
- un deuxième arbre denté (132a) connecté au deuxième pignon (132),
le premier arbre denté (131a) engrenant le deuxième arbre denté (132a) pour relier par inversion de sens de rotation la couronne externe (113) du premier train épicycloïdal (110) et la couronne externe (123) du second train épicycloïdal (120).

8. Ensemble selon la revendication 7, comprenant en outre un actionneur de commande adapté pour piloter la rotation du premier arbre denté ou du deuxième arbre denté, pour contrôler l'effet différentiel du différentiel (133).

9. Ensemble selon la revendication 5 ou la revendication 6, dans lequel le mécanisme de liaison (130) comprend un pignon conique (139), le premier train épicycloïdal comprenant une couronne externe (113) avec une portée conique complémentaire pour engrener avec le pignon conique (139), et le second train épicycloïdal comprenant une couronne externe (123) avec une portée conique complémentaire pour engrener avec le pignon conique (139).

10. Ensemble selon la revendication 9, comprenant en outre un actionneur de commande adapté pour piloter la rotation du pignon conique, pour contrôler l'effet différentiel du différentiel (133).

11. **Véhicule (1)** comprenant :
- un essieu avant (10),
- un essieu arrière (20), et
- un ensemble de transmission de puissance (100) selon l'une des revendications 1 à 10, la première sortie et la deuxième sortie du différentiel de cet ensemble étant relié directement ou indirectement respectivement à un premier arbre de transmission de puissance d'une première roue et à un deuxième arbre de transmission de puissance d'une deuxième roue, de l'essieu avant et/ou à l'essieu arrière du véhicule.

12. Véhicule selon la revendication 11, dans lequel :
- l'essieu avant (10) est couplé à un premier moteur, et l'ensemble de transmission (100) est relié à l'essieu arrière (20) pour obtenir un véhicule à quatre roues motrices, ou
- l'essieu arrière (20) est couplé à un premier moteur, et l'ensemble de transmission (100) est relié à l'essieu avant (10) pour obtenir un véhicule à quatre roues motrices.

13. Véhicule selon l'une des revendications 11 à 12, dans lequel l'ensemble comprend en outre un coupleur selon la revendication 3, et le coupleur est mis dans un état découplé si la vitesse du véhicule est supérieure à une vitesse limite, adaptée au mode de fonctionnement du véhicule.

14. Véhicule selon l'une des revendications 11 à 13, dans lequel l'ensemble comprend en outre un actionneur de commande adapté pour contrôler l'effet différentiel du différentiel, et dans lequel une électronique de contrôle du véhicule contrôle cet actionneur de commande pour contrôler la direction ou angle de lacet du véhicule.

## Patentansprüche

1. **Kraftübertragungsanordnung (100)** für ein Fahrzeug, umfassend:
- eine elektrische Maschine (102) mit einem Stator (103), der in Bezug auf das Fahrzeug feststehend ist, und einem Rotor (104), der in Bezug auf eine Drehachse (AX) der elektrischen Maschine drehbeweglich ist, und
- ein Differential (133) mit wenigstens einem Differentialeingang, der mit dem Rotor der elektrischen Maschine verbunden ist, wobei das Differential eine Vielzahl von Zahnrädern umfasst, die miteinander verbunden sind, um die Leistung am Differentialeingang zu verteilen zwischen:
- einem ersten Ausgang, der dazu bestimmt ist, mit einer ersten Welle zur Kraftübertragung auf ein erstes Rad verbunden zu werden, und
- einem zweiten Ausgang, der dazu bestimmt ist, mit einer zweiten Welle zur Kraftübertragungswelle auf ein zweites Rad verbunden zu werden, wobei die Verteilung eine Funktion der Drehzahl des ersten Ausgangs und des zweiten Ausgangs ist,
- wobei die Zahnräder um die elektrische Maschine herum verteilt sind, wobei sich die elektrische Maschine innerhalb des Volumens des Differentials befindet,
wobei die Baugruppe **dadurch gekennzeichnet ist, dass:**
- die elektrische Maschine (102) eine invertierte Maschine ist, bei der der Rotor in Bezug auf die Drehachse radial außerhalb des Stators liegt.

2. Baugruppe nach Anspruch 1, wobei der Rotor (104) umfasst:
- einen Seitenflansch (104a), der sich radial von der Drehachse aus erstreckt, und
- einen zylindrischen Teil (104d), der Magnete mit abwechselnder Polarität entlang der Umfangsrichtung dieses zylindrischen Teils trägt, wobei die Magnete den Statorwicklungen zugewandt sind.

3. Baugruppe nach einem der Ansprüche 1 bis 2, welche ferner eine Kopplung umfasst, die mit der elektrischen Maschine und dem Differential verbunden ist.

4. Baugruppe nach Anspruch 3, wobei die Kopplung eine Klaue oder eine Kupplung ist, wobei die Kopplung durch mechanische, hydraulische oder elektrische Einwirkung betätigt wird.

5. Baugruppe nach einem der Ansprüche 1 bis 4, wobei das Differential (133) die folgenden Zahnraduntergruppen umfasst:
- ein erstes Planetengetriebe (110), das entlang der Drehachse AX auf einer ersten Seite der elektrischen Maschine angeordnet ist,
- ein zweites Planetengetriebe (120), das entlang der Drehachse AX auf einer zweiten Seite der elektrischen Maschine und gegenüber der ersten Seite angeordnet ist, und
- einen Verbindungsmechanismus (130), der das erste Planetengetriebe (110) mit dem zweiten Planetengetriebe (120) verbindet,
wobei das erste und das zweite Planetengetriebe identisch sind.

6. Baugruppe nach Anspruch 5, wobei das erste Planetengetriebe (110) einen Planetenträger (125) umfasst, der dem zweiten Ausgang des zweiten Planetengetriebes (120) entspricht; eine Antriebswelle (105), die das innere Sonnenrad (111) des ersten Planetengetriebes, das innere Sonnenrad (121) des zweiten Planetengetriebes und den Rotor (104) der elektrischen Maschine (102) verbindet, wobei die Antriebswelle (105) dem Eingang des Differentials entspricht.

7. Baugruppe nach Anspruch 5 oder Anspruch 6, wobei der Verbindungsmechanismus (130) umfasst:
- ein erstes Ritzel (131), das mit der Außenseite eines Außenkranzes (113) des ersten Planetengetriebes (110) kämmt,
- eine erste Zahnwelle (131a), die mit dem ersten Ritzel (131) verbunden ist,
- ein zweites Ritzel (132), das mit der Außenseite eines Außenkranzes (123) des zweiten Planetengetriebes (120) kämmt, und
- eine zweite Zahnwelle (132a), die mit dem zweiten Ritzel (132) verbunden ist,
wobei die erste Zahnwelle (131a) mit der zweiten Zahnwelle (132a) kämmt, um durch Umkehr der Drehrichtung den Außenkranz (113) des ersten Planetengetriebes (110) und den Außenkranz (123) des zweiten Planetengetriebes (120) zu verbinden.

8. Baugruppe nach Anspruch 7, ferner umfassend einen Steueraktuator, der dazu ausgelegt ist, die Drehung der ersten Zahnwelle oder der zweiten Zahnwelle zu steuern, um die Differentialwirkung des Differentials (133) zu steuern.

9. Baugruppe nach Anspruch 5 oder 6, wobei der Verbindungsmechanismus (130) ein Kegelrad (139) umfasst, wobei das erste Planetengetriebe einen Außenkranz (113) mit einem komplementären konischen Sitz zum Eingriff mit dem Kegelrad (139) umfasst und das zweite Planetengetriebe einen Außenkranz (123) mit einem komplementären konischen Sitz zum Eingriff mit dem Kegelrad (139) umfasst.

10. Baugruppe nach Anspruch 9, ferner umfassend einen Steueraktuator, der dazu ausgebildet ist, die Drehung des Kegelrads zu steuern, um die Differentialwirkung des Differentials (133) zu steuern.

11. **Fahrzeug (1),** umfassend:
- eine Vorderachse (10),
- eine Hinterachse (20), und
- eine Kraftübertragungsanordnung (100) nach einem der Ansprüche 1 bis 10, wobei der erste Ausgang und der zweite Ausgang des Differentials dieser Anordnung direkt oder indirekt mit einer ersten Kraftübertragungswelle eines ersten Rades bzw. mit einer zweiten Kraftübertragungswelle eines zweiten Rades der Vorderachse und/oder der Hinterachse des Fahrzeugs verbunden ist.

12. Fahrzeug nach Anspruch 11, wobei:
- die Vorderachse (10) mit einem ersten Motor gekoppelt ist und die Getriebeanordnung (100) mit der Hinterachse (20) verbunden ist, um ein Fahrzeug mit Allradantrieb zu erhalten, oder
- die Hinterachse (20) mit einem ersten Motor gekoppelt ist und die Getriebeeinheit (100) mit der Vorderachse (10) verbunden ist, um ein Fahrzeug mit Vierradantrieb zu erhalten.

13. Fahrzeug nach einem der Ansprüche 11 bis 12, wobei die Baugruppe ferner eine Kopplung nach Anspruch 3 umfasst und die Kopplung in einen entkoppelten Zustand versetzt wird, wenn die Geschwindigkeit des Fahrzeugs über einem Grenzwert liegt, der an den Betriebsmodus des Fahrzeugs angepasst ist.

14. Fahrzeug nach einem der Ansprüche 11 bis 13, wobei die Baugruppe ferner einen Steueraktuator umfasst, der dazu ausgebildet ist, die Differentialwirkung des Differentials zu steuern, und wobei eine Steuerelektronik des Fahrzeugs diesen Steueraktuator steuert, um die Richtung oder den Gierwinkel des Fahrzeugs zu steuern.

## Claims

1. **Power transmission assembly (100)** for a vehicle comprising:
- an electric machine (102) comprising a stator (103) fixed relative to the vehicle and a rotor (104) movable in rotation relative to a rotation axis (AX) of said electric machine, and
- a differential (133) comprising at least one differential input connected to the rotor of the electric machine, said differential comprising a plurality of cogwheels connected with each other to distribute the differential input power between:
- a first output intended to be connected to a first power transmission shaft transmitting power to a first wheel, and
- a second output intended to be connected to a second power transmission shaft transmitting power to a second wheel,
the distribution being a function of the rotation speed of the first output and second output,
- the cogwheels are distributed around the electric machine, the electric machine being located inside the space of the differential,
the assembly being **characterized in that:**
- the electric machine (102) is an inverted machine in which the rotor is radially outside the stator with respect to the rotation axis.

2. Assembly according to claim 1, wherein the rotor (104) comprises:
- a lateral flange (104a) which extends radially from the rotation axis, and
- a cylindrical part (104d) carrying magnets having alternating polarities in the circumferential direction of this cylindrical part, said magnets facing the windings of the stator.

3. Assembly according to one of claims 1 to 2, further comprising a coupler connected between the electric machine and the differential.

4. Assembly according to claim 3, wherein the coupler is a dog clutch or a clutch, said coupler being actuated by mechanical, hydraulic or electrical action.

5. Assembly according to one of claims 1 to 4, wherein the differential (133) includes the following cogwheel subassemblies:
- a first epicyclic gearing (110) arranged along the rotation axis AX on a first side of the electric machine,
- a second epicyclic gearing (120) arranged along the rotation axis AX on a second side of the electric machine, and opposite the first side, and
- a linking mechanism (130) which links the first epicyclic gearing (110) to the second epicyclic gearing (120),
the first and second epicyclic gearings being identical.

6. Assembly according to claim 5, wherein the first epicyclic gearing (110) comprises a planet gear carrier corresponding to the first output (S1) of the differential, the second epicyclic gearing comprises a planet gear carrier (125) corresponding to the second output of the second epicyclic gearing (120), a drive shaft (105) linking the inner sun gear (111), of the first epicyclic gearing, the inner sun gear (121) of the second epicyclic gearing and the rotor (104) of the electric machine (102), the drive shaft (105) corresponding to the differential input.

7. Assembly according to claim 5 or claim 6, wherein the linking mechanism (130) comprises:
- a first pinion (131) which meshes on the outside of an outer ring gear (113) of the first epicyclic gearing (110),
- a first toothed shaft (131a) connected to the first pinion (131),
- a second pinion (132) which meshes on the outside of an outer ring gear (123) of the second epicyclic gearing (120), and
- a second toothed shaft (132a) connected to the second pinion (132),
the first toothed shaft (131a) meshing with the second toothed shaft (132a) to link, by rotational direction reversal, the outer ring gear (113) of the first epicyclic gearing (110) and the outer ring gear (123) of the second epicyclic gearing (120).

8. Assembly according to claim 7, further comprising a command actuator adapted to lead the rotation of the first toothed shaft or the second toothed shaft, so as to control the differential effect of the differential (133).

9. Assembly according to claim 5 or claim 6, wherein the linking mechanism (130) comprises a bevel pinion (139), the first epicyclic gearing comprising an outer crown gear (113) with a complementary conical seating surface for meshing with the bevel pinion (139), and the second epicyclic gearing comprising an outer crown gear (123) with a complementary bevel conical seating surface for meshing with the bevel pinion (139).

10. An assembly according to claim 9, further comprising a command actuator adapted to lead the rotation of the bevel pinion, so as to control the differential effect of the differential (133).

11. **Vehicle (1)** comprising:
- a front axle (10),
- a rear axle (20), and
- a power transmission assembly (100) according to one of claims 1 to 10, the first output and the second output of the differential of this assembly being linked directly or indirectly respectively to a first power transmission shaft of a first wheel and to a second power transmission shaft of a second wheel, from the front axle and/or to the rear axle of the vehicle.

12. Vehicle according to claim 11, wherein:
- the front axle (10) is coupled to a first motor, and the transmission assembly (100) is linked to the rear axle (20) so as to obtain a four-wheel drive vehicle, or
- the rear axle (20) is coupled to a first motor, and the transmission assembly (100) is linked to the front axle (10) so as to obtain a four-wheel drive vehicle.

13. Vehicle according to one of claims 11 to 12, wherein the assembly further comprises a coupler according to claim 3, and the coupler is placed in an uncoupled state if the speed of the vehicle is greater than a limit speed, adapted to the operating mode of the vehicle.

14. Vehicle according to one of claims 11 to 13, wherein the assembly further comprises a command actuator adapted to control the differential effect of the differential, and wherein a control electronics device of the vehicle controls this command actuator so as to control the direction or yaw angle of the vehicle.
